# FASCICULE DE BREVET EUROPEEN

(11) **EP 2 526 670 B1**
(45) Date de publication et mention de la délivrance du brevet: **04.03.2015**
(21) Numéro de dépôt: 11701379.7
(22) Date de dépôt: 18.01.2011
(51) Int. Cl.: H04L 29/06, H04L 29/12

(54) **PROCEDE ET SYSTEME DE PREVENTION D'EMPOISONNEMENT DE CACHES DNS**
VERFAHREN UND SYSTEM ZUR VERHINDERUNG VON DNS-CACHE-VERGIFTUNG
METHOD AND SYSTEM FOR PREVENTING DNS CACHE POISONING

(30) Priorité: 19.01.2010 FR 1000199
(43) Date de publication de la demande: 28.11.2012
(73) Titulaire: ALCATEL LUCENT, 92100 Boulogne-Billancourt (FR)
(72) Inventeur: MARTIN, Antony, F-91620 Nozay (FR); PAPILLON, Serge, F-91620 Nozay (FR)
(74) Mandataire: Sciaux, Edmond
(86) Numéro de dépôt international: PCT/EP2011/050636
(87) Numéro de publication internationale: WO 2011/089129

(56) Documents cités:
- US-A1- 2005 033 858
- US-A1- 2008 060 054
- US-A1- 2010 121 981
- LIHUA YUAN ET AL: "DoX: A Peer-to-Peer Antidote for DNS Cache Poisoning Attacks", COMMUNICATIONS, 2006. ICC '06. IEEE INTERNATIONAL CONFERENCE ON, IEEE, PI, 1 juin 2006 (2006-06-01), pages 2345-2350, XP031025414, ISBN: 978-1-4244-0354-7
- HUNG-MIN SUN ET AL: "DepenDNS: Dependable Mechanism against DNS Cache Poisoning", 12 décembre 2009 (2009-12-12), CRYPTOLOGY AND NETWORK SECURITY, SPRINGER BERLIN HEIDELBERG, BERLIN, HEIDELBERG, PAGE(S) 174 - 188, XP019134674, ISBN: 978-3-642-10432-9 figure 2 page 175, dernier paragraphe page 176, 2.1 page 179, 3.1 page 182, premier-troisième paragraphes
- FETZER C ET AL: "Enhancing DNS Security using the SSL Trust Infrastructure", OBJECT-ORIENTED REAL-TIME DEPENDABLE SYSTEMS, 2005. WORDS 2005. 10TH I EEE INTERNATIONAL WORKSHOP ON SEDONA, AZ, USA 02-04 FEB. 2005, PISCATAWAY, NJ, USA,IEEE, 2 février 2005 (2005-02-02), pages 21-27, XP010856870, ISBN: 978-0-7695-2347-7

## Description

La présente invention se rapporte aux techniques de sécurisation des systèmes de noms de domaine.

On désigne, ci-après, par « système de noms de domaine » ou « serveur DNS (pour Domain Name System en anglais) » tout système permettant d'établir une correspondance entre un nom de domaine (ou un nom de hôte) et une adresse IP, ou plus généralement, de trouver une information à partir d'un nom de domaine ou d'une adresse IP.

Par ailleurs, on entend, ici, par « requête DNS» un message requérant la résolution d'un nom de domaine ou d'une adresse IP. La réponse à une telle requête DNS est désignée, ci-après, par « réponse DNS ». Une réponse DNS peut, notamment, comprendre un nom de domaine, une adresse IP, un message d'erreur ou un code d'erreur. Il est à noter que la résolution d'une requête DNS concerne toute application utilisant le protocole DNS via un réseau informatique telle que, par exemple, la navigation Web, la messagerie électronique, ou la connexion VPN.

Du fait du grand nombre des noms de domaines (ou équivalemment, d'adresses IP), un serveur DNS ne peut comprendre, en réalité, qu'un ensemble restreint d'informations. Il ne peut, par conséquent, résoudre tous les noms de domaine. Pour cela, on distingue généralement un système distribué de serveurs DNS dans lequel chaque serveur DNS, lorsqu'il reçoit une requête DNS à laquelle il n'a pas de réponse,
- relaye cette requête à un ou plusieurs autres serveurs DNS afin de lui fournir en retour une réponse (méthode récursive); ou
- désigne un autre serveur DNS qui sera, par la suite, sollicité pour répondre à cette requête DNS (méthode itérative).

Afin d'optimiser le temps de réponse aux requêtes DNS ultérieures ainsi que d'éviter la surcharge d'un serveur DNS particulier du système distribué, la plupart des serveurs DNS font aussi office de cache DNS. Autrement dit, un serveur DNS garde en mémoire, pendant un TTL (Time To live) prédéfini par l'administrateur du serveur DNS, la réponse obtenue à une requête DNS afin de ne pas ré-effectuer à nouveau ce procédé ultérieurement.

Cependant, ce cache DNS est vulnérable à une attaque communément connue sous le nom d'empoisonnement de cache DNS (ou DNS cache poisoning, en anglais) (« *DNS 2008 and the new (old) nature of critical infrastructure* », *Dan Kaminsky, Mexico 2009*). Cette attaque vise à faire correspondre un nom de domaine valide (réel) d'une machine publique (www.google.com par exemple) à une information incorrecte (une adresse IP invalide ou une fausse réponse DNS par exemple) qui sera mémorisée dans le cache DNS.

Une fois qu'une fausse réponse DNS à une requête DNS, concernant un certain domaine, est ainsi mémorisée dans le cache DNS, elle sera donc automatiquement la réponse, pendant TTL, aux requêtes DNS ultérieures concernant ce même domaine. Tous les utilisateurs de ce cache DNS sont, par conséquent, vulnérables.

En particulier, l'empoisonnement d'un cache DNS permet de rediriger un utilisateur vers un site dont le contenu peut avoir pour conséquence des applications malveillantes (la propagation de virus, le hameçonnage en récupérant des informations personnelles, la propagande en renvoyant un site vers un autre site concurrent ou vers un site inexistant par exemple).

Un objet de la présente invention est de remédier aux inconvénients précités.

Un autre objet de la présente invention est d'éviter l'empoisonnement d'un cache DNS appartenant à un réseau informatique pourvu d'une pluralité de caches DNS.

Un autre objet de la présente invention est d'apporter, à un système distribué de caches DNS, une méthode de prévention d'une attaque d'empoisonnement des caches DNS avec le minimum de modification dans ce système.

Un autre objet de la présente invention est de proposer un procédé et un système de prévention des attaques d'empoisonnement des caches DNS compatibles avec le protocole DNS utilisé par les caches DNS.

Un autre objet de la présente invention est de proposer un système autonome de prévention des attaques d'empoisonnement des caches DNS.

Un autre objet de la présente invention est d'améliorer la consistance de la résolution DNS dans le réseau d'un Fournisseur d'Accès à Internet.

Un autre objet de la présente invention est de proposer une méthode de prévention des attaques d'empoisonnement des caches DNS compatible avec la majorité des réseaux des Fournisseur d'Accès à Internet (FAI).

Un autre objet de la présente invention est de proposer une contre-mesure à une attaque d'empoisonnement des caches DNS dans un réseau informatique.

Un autre objet de la présente invention est d'améliorer la sécurité informatique rendue aux utilisateurs connectés à un réseau d'un Fournisseur d'Accès à Internet.

L'invention est définie dans les revendications indépendantes 1 et 8.

À cet effet, l'invention propose, suivant un premier aspect, un procédé de prévention d'empoisonnement d'au moins un cache DNS dans un réseau informatique incluant une pluralité de caches DNS, ce procédé comprenant une étape de comparaison d'au moins deux réponses DNS, retournées par deux caches DNS différents, à une requête DNS.

L'invention se rapporte, selon un deuxième aspect, à un système de prévention d'empoisonnement d'au moins un cache DNS dans un réseau informatique incluant une pluralité de cache DNS, ce système comprenant un analyseur d'au moins deux réponses DNS, retournées par deux caches DNS différents, à une requête DNS.

Avantageusement, ce système comprend en outre un analyseur de requêtes DNS pourvu d'une base de données d'informations sur les requêtes DNS permettant d'identifier le service auquel est associée une requête DNS.

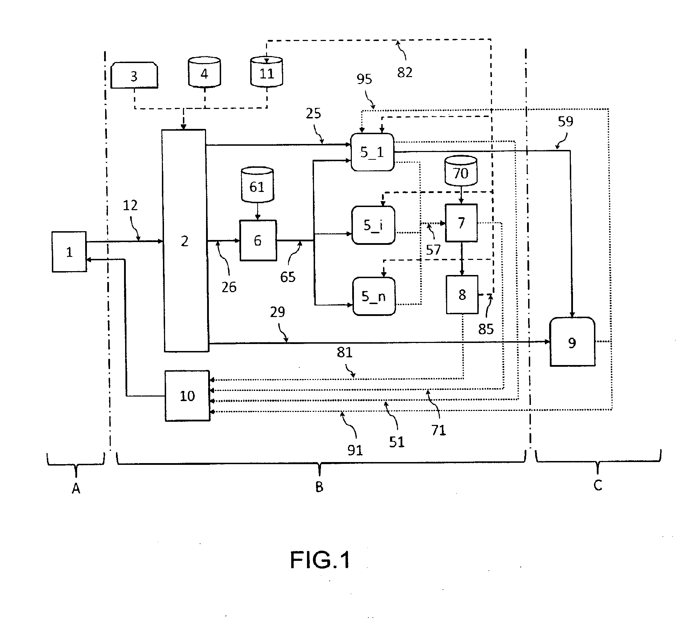

D'autres caractéristiques et avantages de l'invention apparaîtront plus clairement et de manière concrète à la lecture de la description ci-après de modes de réalisation préférés, laquelle est faite en référence à la figure 1 qui illustre graphiquement les interactions entre les modules d'un mode de réalisation.

Un réseau B d'un FAI comprend généralement une pluralité de caches DNS 5_1, 5_2, ..., 5_n (n>1) chargés de répondre aux requêtes DNS émises depuis au moins un résolveur DNS 1 appartenant à client A connecté à ce réseau B. Un résolveur DNS 1 est, généralement, un programme client permettant de formuler des requêtes DNS en destination du réseau B et d'interpréter les réponses DNS qui lui sont retournées.

En cas d'incapacité de répondre à une requête DNS sur la base des informations disponibles au niveau des caches DNS 5_1, 5_2, ..., 5_n, la réponse DNS est sollicitée auprès d'un serveur DNS racine 9 appartenant à un opérateur C de serveurs de noms.

Une réponse DNS est généralement communiquée à un répondeur DNS 10, du réseau B, chargé de relayer cette réponse au résolveur DNS 1, source de la requête DNS.

Un système de gestion 3 des caches DNS permet le contrôle simultané ou individuel des caches DNS 5_1, 5_2, ..., 5_n. Le système de gestion 3 permet, par exemple, de modifier le TTL au niveau de chaque cache DNS ou activer/désactiver un cache DNS.

La prévention d'une attaque d'empoisonnement des caches DNS 5_1, 5_2, ..., 5_n est assurée à l'aide de modules fonctionnels qui peuvent être adaptés à tout réseau informatique B comprenant une pluralité de caches DNS, notamment à celui d'un Fournisseur d'Accès à Internet (FAI).

En particulier, ces modules comprennent :
- un analyseur de requête DNS 2 permettant de décider sur la manière de traitement d'une requête DNS transmise depuis un résolveur DNS 1 ;
- un diffuseur 6 de requête DNS sur une pluralité de caches DNS;
- un comparateur 7 de réponses DNS obtenues depuis une pluralité de caches DNS ;
- un analyseur de réponses DNS 8 obtenues depuis une pluralité de caches DNS; et
- une pluralité de bases données informatives extensibles assistant le système de prévention des attaques d'empoisonnement des caches DNS 5_1 , ..., 5_n.

Dès la réception, par l'analyseur de requêtes DNS 2, d'une requête DNS émise depuis un résolveur DNS 1 (lien 12 sur la figure 1), l'analyseur de requêtes DNS 2 permet de décider sur le traitement à effectuer pour résoudre cette requête DNS. La décision est prise en fonction d'informations récupérées depuis:
- une base de données 4 d'informations sur les requêtes DNS telles que le service (navigation, messagerie, streaming, e-commerce, e-Learning par exemple) et/ou le protocole (http, https, pop3, ftp, smtp par exemple) auxquels sont associées les requêtes DNS ;
- une base de données 11 de réponses DNS invalides ; et
- le système de gestion 3 des caches DNS 5_1, 5_2, ..., 5_n qui peut être configuré par l'administrateur du réseau B.

La base de données 4 d'informations sur les requêtes DNS utilise le contenu d'une requête DNS (notamment, le nom de domaine : ebay.com, google.com par exemple, et le protocole de transport: http, https, smtp par exemple) afin d'identifier le service auquel est associée cette requête DNS. A titre d'exemple, si une requête DNS comprend
o le nom de domaine « ebay.com », alors la base de données 4 d'informations permet d'identifier ce nom de domaine et de l'associer à un service de e-commerce ;
o le nom de domaine « home.americanexpress.com », alors la base de données 4 d'informations identifie ce nom de domaine et l'associe à un service de e-banking;
o le protocole smtp, alors la base de données 4 d'informations permet d'associer cette requête à une application de messagerie électronique.

Le contenu de la base de données 4 d'informations peut être précédemment établi manuellement et/ou automatiquement enrichi (apprentissage automatique) en fonction des informations contenues dans les requêtes DNS reçues. La base de données 4 d'informations permet ainsi de distinguer les requêtes DNS supposées critiques selon l'administrateur du réseau B (un service e-commerce/e-banking ou une messagerie électronique par exemple).

Dans un mode de réalisation, l'analyseur de requêtes DNS 2 permet d'étiqueter chaque requête DNS par un niveau d'importance (« critique », « important », « moyen », ou choisi entre 1 et 10 par exemple) en fonction du service identifié par la base de données 4 d'informations.

Il est à noter aussi que le choix du traitement à effectuer pour la résolution d'une requête DNS peut être programmé depuis le système de gestion 3 des caches DNS en fonction, par exemple,
- du temps : heures de pointe ou non ;
- de la disponibilité des caches DNS : entretien, saturation ;
- de la source des requêtes DNS : clients avec différents types d'abonnement ;
- du service auquel est associée une requête DNS : e-commerce, e-banking, messagerie, VPN par exemple.

Dans un mode de réalisation, on distingue trois traitements possibles en vue de résoudre une requête DNS :
- la requête DNS est transmise à un seul cache DNS (par exemple, le cache DNS 5_1 tel qu'il est indiqué sur la figure 1 : lien 25) ;
- la requête DNS est transmise au diffuseur 6 de requête DNS (lien 26 sur la figure 1); ou
- la requête DNS est transmise directement au serveur DNS racine 9 (lien 29 sur la figure 1).

Il est à noter qu'une réponse DNS peut être obtenue depuis le réseau B,
- d'une manière récursive : à la réception d'une requête DNS, un serveur DNS interroge son cache DNS local 5_j (1<= j <= n) (par exemple, cache DNS 5_1 tel qu'il est indiqué sur la figure 1) au sujet de cette requête. S'il dispose localement d'une réponse à cette requête, alors cette réponse est communiquée au module de réponse DNS 10 (lien 51 sur la figure 1). A défaut, le serveur DNS prend le rôle de résolveur et transmet lui-même la requête DNS à un autre serveur DNS plus susceptible de disposer de l'information demandée (en d'autres termes, un serveur DNS dont la probabilité qu'il dispose de l'information demandée est suffisamment élevée). Si aucun serveur DNS ne dispose de la réponse, la requête est finalement réalisée auprès d'un serveur DNS racine 9 (lien 59 sur la figure 1) dont une copie de la réponse DNS (lien 95 de la figure 1) sera mémorisée pendant un TTL dans le cache DNS; ou
- d'une manière itérative: si un cache DNS ne comprend pas localement une réponse à une requête DNS, elle demande au résolveur DNS 1 de s'adresser directement à un autre serveur DNS plus susceptible de disposer de l'information demandée. Si aucun serveur DNS ne dispose de la réponse, la requête est finalement réalisée auprès d'un serveur DNS racine 9 (lien 29 sur la figure 1). La réponse DNS délivrée par le serveur DNS racine 9 est communiquée au répondeur DNS 10 (lien 91 sur la figure 1).

Dans un autre mode de réalisation la réponse DNS est obtenue d'une manière consolidée entre une pluralité de caches DNS comme suit :
- dès qu'une requête DNS est parvenue au diffuseur 6 de requête DNS, elle est diffusée à une liste de caches DNS (lien 65 de la figure 1) suivant des critères de diffusion stockés dans une base de données 61 ;
- les réponses DNS obtenues par la liste des caches DNS sont toutes communiquées au comparateur 7 de réponses DNS (lien 57 de la figure 1) ;
- en fonction des réponses DNS obtenues, le comparateur 7, assisté d'une base de données informative 70, permet:
   o soit de communiquer une réponse DNS au répondeur DNS 10 (lien 71 sur la figure 1) ;
   o soit de transmettre les résultats obtenus à un analyseur de réponses DNS 8 ;
- l'analyseur de réponses DNS 8 permet, à son tour, d'étudier ces réponses DNS et de transmettre, par la suite, une seule réponse DNS au répondeur DNS 10 (lien 81 sur la figure 1).

Il est à noter que la diffusion, par le diffuseur 6, d'une requête DNS à une liste de caches DNS, est faite selon des informations récupérées depuis la base de données 61. La base de données 61 comprend des informations concernant les caches DNS 5_1 , 5_2, ..., 5_n du réseau B, telles que, par exemple, le nombre, la topologie, la localisation géographique, l'adresse IP, la taille du contenu et le nombre d'utilisateurs connectés aux caches DNS 5_1, ..., 5_n.

Avantageusement, en fonction des données disponibles dans la base de données 61, le diffuseur 6 permet de relayer la requête DNS uniquement aux caches DNS estimés pertinents. En effet, dans un mode de réalisation, la liste des caches DNS auxquels une requête DNS sera relayée par le diffuseur 6, est choisie en fonction :
- des informations récupérées depuis la base de données 61 telle que la localisation des serveurs DNS. Par exemple, en supposant qu'il y a moins de risque d'empoisonnement, par une même donnée invalide, de deux caches DNS spatialement distants, alors : plus les serveurs cache DNS sont distants, plus il est probable qu'une réponse DNS retournée par le cache DNS local, identique (déterminé par le comparateur 7) à la réponse DNS retournée par un cache DNS distant, soit valide (correcte). Ceci dépend, notamment, de la topologie du réseau informatique B; et/ou
- des informations fournies par l'analyseur de requêtes DNS 2 : par exemple, si une requête DNS est marquée « critique » par l'analyseur DNS 2, alors, de préférence, un plus grand nombre de caches DNS sont interrogés. Autrement dit, le nombre des caches DNS à interroger est, de préférence, fonction du service auquel est associée la requête DNS. Cela permet également d'optimiser, au regard des performances, le processus de vérification des réponses DNS.

Le comparateur 7 des réponses DNS permet de centraliser, ensuite comparer toutes les réponses DNS obtenues depuis la liste des caches DNS interrogés (c.à.d. désignées par le diffuseur 6 de requêtes DNS).

Si toutes les réponses DNS sont identiques, alors cette réponse DNS sera directement communiquée au répondeur DNS 10 (lien 71 sur la figure 1), qui, à son tour, la transfère au résolveur DNS 1 ou directement communiquée au résolveur DNS 1 (sans passer par le DNS 10).

Il est à noter que certains domaines possèdent plus qu'une adresse IP (ou inversement, c.à.d. une adresse IP qui correspond à plus qu'un nom de domaine). Dans ce cas, ayant accès à des préfixes IP stockés dans une base de données 70 (déjà alloués à des entreprises: ebay^{™}, Microsoft^{™}, HSBC^{™}, Youtube^{™} par exemple), le comparateur 7 est apte à comparer les adresses IP des sous-réseaux pour distinguer des noms de domaines identiques. Si une réponse DNS comprend une adresse IP non identifiée dans la base de données 70, elle peut être donc une éventuelle réponse DNS invalide.

Il est aussi possible d'utiliser une résolution DNS inverse afin de confronter deux réponses DNS retournées par deux caches DNS différents : requérir, à un cache DNS (5_1 par exemple), la résolution inverse d'un nom de domaine associé à une adresse IP retournée par un autre cache DNS (5_2 par exemple). Une différence entre les deux réponses DNS prouve l'empoisonnement d'au moins un des deux caches DNS.

Si les réponses DNS sont différentes, alors elles sont transmises à l'analyseur de réponses DNS 8. L'analyseur de réponses DNS 8 permet
- de calculer les proportions des réponses DNS ;
- classifier les réponses DNS selon leurs proportions ; et
- d'agir en conséquence :
   o retenir une réponse DNS qui sera transmise au répondeur DNS 10 (lien 81 sur la figure 1) ou directement au résolveur 1 et confirmée à au moins les caches DNS interrogés (lien 85 de la figure 1); ou
   o dans le cas où un problème est détecté, déclencher une action telles que, par exemples: notifier le résolveur 1 d'une attaque d'empoisonnement de cache DNS, envoyer une erreur au résolveur 1, ne rien transmettre au résolveur 1, déclencher une alerte interne adressée à l'administrateur du réseau B en y indiquant qu'il y a un risque potentiel d'empoisonnement de cache DNS.

Avantageusement, l'analyseur de réponses DNS 8 peut être paramétré/configuré par un administrateur du réseau B (proportions seuils, actions à déclencher en cas de détection d'un problème d'empoisonnement de caches DNS par exemple).

A titre d'exemple illustratif, dans le cas de cinq réponses DNS dont quatre sont identiques, l'analyseur de réponses DNS 8 déduit donc la présence d'une réponse dominante qui sera transmise au répondeur DNS 10 ou directement au résolveur 1.

En cas d'incohérence entre les réponses DNS retournées par les caches DNS interrogés - tel que le cas, par exemple, parmi cinq réponses DNS, uniquement trois réponses DNS sont identiques et les deux autres sont différentes - alors l'analyseur de réponses DNS 8 ne peut conclure sur une réponse DNS valide. Dans ce cas, les actions suivantes peuvent être entreprises :
- informer le résolveur 1 d'un éventuel problème de sécurité. Cette information peut être incorporée dans le champ « TXT » d'une réponse DNS qui comprend des informations descriptives du domaine ;
- enregistrer les réponses DNS invalides (ceux de faible proportions par exemple) dans la base de données 11 des réponses DNS invalides ;
- informer l'administrateur du réseau B d'une éventuelle attaque d'empoisonnement des caches DNS.

Dans un mode de réalisation, la réponse DNS ayant la proportion la plus élevée parmi l'ensemble des réponses DNS retournées par les caches DNS est considérée la réponse DNS à la requête DNS.

Si une réponse DNS invalide est confirmée, elle est ajoutée à la base de données 11 de réponses DNS invalides (lien 82 sur la figure 1). Ceci permettra de prévenir les caches DNS lors de la résolution des requêtes DNS ultérieures.

Un protocole de communication peut être défini, selon la RFC 5507 de l'IETF, pour le transport d'une notification d'erreur depuis l'analyseur de réponses DNS 8 au répondeur DNS 10 (ou équivalemment, au résolveur DNS 1).

En cas de déduction d'un problème d'empoisonnement d'un ou plusieurs caches DNS à partir des proportions des réponses DNS, une commande de réduction vers 0 des TTL des caches DNS concernés peut être lancée/programmée (par exemple, réduire le TTL des caches DNS ayant retourné une réponse DNS de faible proportion parmi l'ensemble des réponses DNS). Cette commande peut être immédiate : elle consiste à positionner le TTL à 0 immédiatement. En variante, cette commande peut être de type arithmétique : elle peut consister à ordonner une réduction constante du TTL par décrément prédéterminé (par exemple 1 ou 2 secondes). En variante, la commande peut être de type géométrique, et peut consister par exemple à ordonner une division par deux du TTL des caches DNS concernés. Cette commande vise à forcer les caches DNS à renouveler leurs caches. Par exemple, une entrée d'un cache DNS avec un TTL de 3600 secondes peut être positionné à 0 secondes et ainsi devenir invalide.

Des mesures alternatives en cas de déduction d'un problème d'empoisonnement d'un ou plusieurs caches DNS à partir des proportions des réponses DNS, sont par exemple l'expiration d'une zone DNS, ou la configuration d'une entrée DNS persistante dans les caches DNS concernés par le problème. Cela permet d'assurer que les caches DNS incriminés retournent une valeur valide s'ils sont interrogés ultérieurement. Cette mesure est temporaire et doit être supprimée ultérieurement pour permettre la constitution dynamique des bases de données des caches DNS.

Dans un mode de réalisation, le comparateur 7 des réponses DNS et l'analyseur de réponses DNS 8 sont combinés en un seul module fonctionnel.

Avantageusement, la réponse DNS ainsi obtenue est consolidée via une pluralité de caches DNS.

Avantageusement, le procédé qui vient d'être décrit permet de prévenir une attaque d'empoisonnement de caches DNS grâce à une utilisation intelligente des serveurs caches DNS déjà existants dans un réseau d'un FAI.

Dans un autre mode de réalisation, le diffuseur 6 de requête DNS relaye une requête DNS
- à au moins un cache DNS (cache DNS 5_1 par exemple) et ;
- à au moins un serveur DNS racine 9
pour comparer, par la suite, les réponses DNS qu'ils retournent. Ceci permet d'avoir une entrée de plus au comparateur 7 des réponses DNS.

Dans un autre mode de réalisation permettant d'éviter l'empoisonnement des caches DNS, on modifie la manière de vérifier la validité du contenu des caches DNS. Autrement dit, au lieu d'échanger des informations avec le protocole DNS, un autre protocole de vérification de la validité du contenu des caches DNS est développé.

Avantageusement, les modes de réalisation qui viennent d'être décrits mettent à profit le système distribué de caches DNS qui figure déjà dans la plupart des réseaux des FAIs.

Il est à noter que les modes de réalisation décrits ci-dessus sont indépendants du système d'exploitation utilisé par le client A connecté au réseau B.

Dans un autre mode de réalisation, le module DNS 10 est optionnel et les réponses DNS sont ainsi directement transmises au résolveur DNS 1.

Dans un autre mode de réalisation, les passerelles résidentielles des FAIs, installées chez leurs clients, constituent des caches DNS. Ces passerelles résidentielles connectées au réseau de l'opérateur peuvent ainsi combiner les modules 2, 6, 5_i et optionnellement 7, 8, 10 et optionnellement les bases de données associées à ces modules.

## Revendications

1. Procédé de prévention d'empoisonnement d'au moins un cache DNS (5_i) dans un réseau informatique (B) incluant une pluralité de caches DNS (5_1, 5_i, 5_n), ce procédé comprenant une étape de comparaison d'au moins deux réponses DNS, retournées par deux caches DNS différents, à une requête DNS, et étant **caractérisé en ce qu'**il comprend une étape d'analyse de la requête DNS permettant d'identifier le service auquel est associée ladite requête DNS, avant l'interrogation d'un nombre de caches DNS qui est fonction du service auquel est associée la requête DNS.

2. Procédé selon la revendication 1, **caractérisé en ce que** l'étape de comparaison des réponses DNS comprend une étape de résolution inverse d'une requête DNS par au moins un cache DNS.

3. Procédé selon la revendication 1, **caractérisé en ce que** l'étape de comparaison des réponses DNS comprend une étape de calcul des proportions des réponses DNS.

4. Procédé selon la revendication 3, **caractérisé en ce que** la réponse DNS ayant la proportion la plus élevée parmi l'ensemble des réponses DNS retournées par les caches DNS est la réponse DNS à la requête DNS.

5. Procédé selon la revendication 1, **caractérisé en ce qu'**une incohérence entre les réponses DNS retournées par les caches DNS déclenche au moins une des actions suivantes :
- informer la source de la requête DNS d'un problème de sécurité;
- informer l'administrateur du réseau (B) informatique d'une éventuelle attaque d'empoisonnement d'au moins un cache DNS ;
- enregistrer au moins une de ces réponses DNS dans une base de données (11).

6. Procédé selon la revendication 3, **caractérisé en ce que** le Time To Live d'un cache DNS retournant une réponse DNS de faible proportion parmi les réponses retournées par l'ensemble des caches DNS est réduit à 0.

7. Procédé selon l'une quelconque des revendications 1 à 6, **caractérisé en ce que** les réponses DNS comprennent une réponse DNS retournée par un serveur DNS racine (9).

8. Système de prévention d'empoisonnement d'au moins un cache DNS dans un réseau informatique incluant une pluralité de caches DNS, ce système comprenant un analyseur d'au moins deux réponses DNS, retournées par deux caches DNS différents, à une requête DNS, et étant **caractérisé par** un analyseur de la requête DNS (2) pourvu d'une base de données (4) d'informations sur la requête DNS permettant d'identifier le service auquel est associée la requête DNS, et par un diffuseur (6) permettant la diffusion d'une requête DNS à une liste de caches DNS en fonction des informations fournies par l' analyseur (2), le nombre de caches DNS à interroger étant fonction du service auquel est associée la requête DNS.

9. Système selon la revendication 8, **caractérisé en ce que** les réponses DNS comprennent une réponse DNS retournée par un serveur DNS racine (9).

## Patentansprüche

1. Verfahren zur Verhinderung der Vergiftung mindestens eines DNS-Cache-Speichers (5_i) in einem Rechnerverbund (B) mit einer Vielzahl von DNS-Cache-Speichern (5_1, 5_i, 5_n), wobei dieses Verfahren einen Schritt des Vergleichens mindestens zweier von zwei unterschiedlichen DNS-Cache-Speichern zurückgesendeten DNS-Antworten mit einer DNS-Anforderung umfasst, **dadurch gekennzeichnet, dass** ein Schritt der Analyse der DNS-Antwort die Identifizierung des Dienstes, mit welchem die besagte DNS-Anforderung assoziiert ist, ermöglicht, bevor eine Anzahl von DNS-Cache-Speichern, welche von dem Dienst, mit dem die DNS-Anforderung assoziiert ist, abhängt, abgefragt wird.

2. Verfahren nach Anspruch 1, **dadurch gekennzeichnet, dass** der Schritt des Vergleichens der DNS-Antworten einen Schritt des inversen Auflösens einer DNS-Anforderung durch mindestens einen DNS-Cache-Speicher umfasst.

3. Verfahren nach Anspruch 1, **dadurch gekennzeichnet, dass** der Schritt des Vergleichens der DNS-Antworten einen Schritt des Berechnens der Proportionen der DNS-Antworten umfasst.

4. Verfahren nach Anspruch 3, **dadurch gekennzeichnet, dass** die DNS-Antwort, welche die höchste Proportion unter allen von den DNS-Cache-Speichern zurückgesendeten Antworten aufweist, die DNS-Antwort auf die DNS-Anforderung ist.

5. Verfahren nach Anspruch 1, **dadurch gekennzeichnet, dass** eine Inkohärenz zwischen den von den DNS-Cache-Speichern mindestens eine der folgenden Vorgänge auslöst:
- Informieren der Quelle der DNS-Anforderung über ein Sicherheitsproblem;
- Informieren des Administrators des Rechnerverbunds (B) über einen eventuellen Vergiftungsangriff mindestens eines DNS-Cache-Speichers;
- Speichern mindestens einer dieser DNS-Antworten in einer Datenbank (11).

6. Verfahren nach Anspruch 3, **dadurch gekennzeichnet, dass** die Time-to-Live eines DNS-Cache-Speichers, der eine DNS-Antwort mit niedriger Proportion unter den von allen DNS-Speichern zurückgesendeten Antworten zurücksendet, auf 0 reduziert wird.

7. Verfahren nach einem beliebigen der Ansprüche 1 bis 6, **dadurch gekennzeichnet, dass** die DNS-Antworten eine von einem DNS-Root-Server (9) zurückgesendete DNS-Antwort umfassen.

8. System zur Verhinderung der Vergiftung mindestens eines DNS-Cache-Speichers in einem Rechnerverbund mit einer Vielzahl von DNS-Cache-Speichern, wobei dieses System einen Analysator für mindestens zwei von zwei verschiedenen DNS-Cache-Speichern zurückgesendeten DNS-Antworten auf eine DNS-Anforderung umfasst und durch einen Analysator der DNS-Anforderung (2), der über eine Datenbank (4) mit Informationen über die DNS-Anforderung verfügt und die Identifikation des Dienstes, mit welchem die DNS-Anforderung assoziiert ist, ermöglicht, und durch einen Verteiler (6), der die Verteilung einer DNS-Liste gemäß den von dem Analysator (2) bereitgestellten Informationen an eine DNS-Cache-Speicherliste ermöglicht, gekennzeichnet ist, wobei die Anzahl der zu befragenden DNS-Cache-Speicher von dem Dienst, mit welchem die DNS-Anforderung assoziiert ist, abhängt.

9. System nach Anspruch 8, **dadurch gekennzeichnet, dass** die DNS-Antworten eine von einem DNS-Wurzelserver (9) zurückgesendete DNS-Antwort umfassen.

## Claims

1. A method for preventing the poisoning of at least one DNS cache (5_i) in a computer network (B) with a plurality of DNS caches (5_1, 5_i, 5_n), which method includes a step of comparing at least two DNS responses returned by two different DNS caches to a DNS request, and **characterized in that** it comprises a step of analyzing the DNS request to identify the service with which said DNS request is associated, before querying a number of DNS caches that depends on the service that the DNS request is associated with.

2. A method according to claim 1, **characterized in that** the step of comparing DNS responses comprises a step of reverse lookup of a DNS request by at least one DNS cache.

3. A method according to claim 1, **characterized in that** the step of comparing DNS responses comprises a step of computing the weights of the DNS responses.

4. A method according to claim 3, **characterized in that** the DNS response with the highest weight from among the set of DNS responses returned by the DNS caches is the DNS response to the DNS request.

5. A method according to claim 1, **characterized in that** an inconsistency between the DNS responses returned by the DNS caches triggers at least one of the following actions:
- informing the source of the DNS request of a security problem
- informing the administrator of the computer network (B) of a potential poisoning attack on at least one DNS cache
- saving at least one of those DNS responses in a database (11).

6. A method according to claim 3, **characterized in that** the Time To Live of a DNS cache returning a low-weight DNS response from among the responses returned by all of the DNS caches is reduced to 0.

7. A method according to any one of the claims 1 to 6, **characterized in that** the DNS responses comprise a DNS response returned by the DNS root server (9).

8. A system for preventing the poisoning of at least one DNS cache in a computer network including a plurality of DNS caches, which method comprises a step of comparing at least two DNS responses returned by two different DNS caches to a DNS request, and **characterized by** a DNS request analyzer (2) provided with an information database (4) on the DNS request making it possible to identify the service with which the DNS request is associated, and by a forwarder (6) making it possible to forward a DNS request to a list of DNS caches based on the information provided by the analyzer (2), the number of DNS caches to be queries depending on the service that the DNS request is associated with.

9. A system according to claim 8, **characterized in that** the DNS responses comprise a DNS response returned by a DNS root server (9).
